# EUROPÄISCHE PATENTSCHRIFT

(11) **EP 4 607 061 B1**
(45) Veröffentlichungstag und Bekanntmachung des Hinweises auf die Patenterteilung: **31.12.2025**
(21) Anmeldenummer: 24158881.3
(22) Anmeldetag: 21.02.2024
(51) Int. Cl.: F16H 19/04, F16H 55/10, F16H 55/26

(54) **ANTRIEBSSYSTEM**
PROPULSION SYSTEM
SYSTÈME D'ENTRAÎNEMENT

(43) Veröffentlichungstag der Anmeldung: 27.08.2025
(73) Patentinhaber: Beutler, Jörg, 83607 Holzkirchen (DE)
(72) Erfinder: Beutler, Jörg, 83607 Holzkirchen (DE); Oehrlein, Johannes, 82281 Egenhofen (DE)
(74) Vertreter: Lermer, Christoph

(56) Entgegenhaltungen:
- FR-A1- 3 032 678
- JP-A- H05 187 502
- US-A1- 2017 370 459

## Beschreibung

### TECHNISCHES GEBIET

Die vorliegende Erfindung betrifft ein Antriebssystem, umfassend: ein Antriebselement; und eine Gegenverzahnung, wobei das Antriebselement wenigstens ein Antriebsrad mit Eingriffselementen aufweist.

### STAND DER TECHNIK

Formschlüssige Antriebe sind bekannt, beispielsweise in Transportsystemen, wie Zahnradbahnen oder im Bergbau. Formschlüssige Antriebe haben gegenüber reibschlüssigen Antrieben den Vorteil, dass der Wirkungsgrad verbessert werden kann, da ein Gleiten des Antriebsrads auf der Antriebsschiene bei einem formschlüssigen Eingriff praktisch ausgeschlossen ist. Zudem sind größere Momente und somit größere Beschleunigungen vom Antrieb auf eine Gegenverzahnung, z.B. eine Zahnstange oder Zahnkette, übertragbar.

Insbesondere bei der Übertragung größerer Momente tritt jedoch das Problem auf, dass eine geeignete Übersetzung vom Motor auf die Gegenverzahnung nicht umgesetzt werden kann und die Kraftübertragung durch die Zahl der zugleich eingreifenden Zähne des Antriebsritzels begrenzt ist. Außerdem können auftretende Unregelmäßigkeiten in der Gegenverzahnung, z.B. Teilungsfehler in der Gegenverzahnung oder Übergänge von einer zur nächsten Gegenverzahnung, in bestimmten Anwendungsfällen nicht zufriedenstellend kompensiert werden.

Durch eine Vergrößerung des Durchmessers des Antriebsrads, also einer Vergrößerung des Teilkreisdurchmessers des Antriebsrads, der in die Gegenverzahnung eingreift, ist dieses Problem lösbar. Allerdings erhöht sich dadurch der benötigte Bauraum deutlich und die Maßnahme führt zu einer Erhöhung des erforderlichen Momentes, wodurch die Anforderungen an das Getriebe steigen. Zudem sind - auch bei einem vergrößertem Antriebsrad - die einzelnen Eingriffselemente konstruktiv bedingt nicht verschieblich zueinander angeordnet, was dazu führt, dass Teilungsfehler innerhalb der Gegenverzahnung dazu führen können, dass die gesamte Antriebskraft zumindest zeitweise von einem einzelnen Eingriffselement übertragen wird, mit der Folge einer möglichen Überlastung einzelner Eingriffselemente.

Einen bekannten formschlüssigen Antrieb zeigt das Patent EP2483121B1.

Die Druckschrift JP H05 187502 A offenbart einen Linearantrieb mit einem Antriebselement und einer passiven Zahnstange, wobei das Antriebselement zwei Antriebsräder mit Eingriffselementen aufweist, die jeweils tangential zueinander versetzt sind.

### AUFGABE DER ERFINDUNG

Ausgehend davon besteht die Aufgabe der vorliegenden Erfindung darin, ein Antriebssystem mit reduziertem Platzbedarf vorzuschlagen, das Teilungsfehler in der Gegenverzahnung kompensieren kann.

### TECHNISCHE LÖSUNG

Diese Aufgabe wird gelöst durch ein Antriebssystem gemäß dem Anspruch 1. Vorteilhafte Merkmale und bevorzugte Ausführungsformen ergeben sich aus den abhängigen Ansprüchen.

Das erfindungsgemäße Antriebssystem umfasst: ein Antriebselement; und eine Gegenverzahnung, wobei das Antriebselement zwei oder mehrere Antriebsräder mit Eingriffselementen aufweist, wobei die Antriebsräder so angeordnet sind, dass Eingriffselemente der Antriebsräder abwechselnd in die Gegenverzahnung eingreifen und sich zumindest zeitweise mindestens jeweils ein Eingriffselement von den mindestens zwei Antriebsrädern im Eingriff mit der Gegenverzahnung befindet.

Die Eingriffselemente der verschiedenen Antriebsräder sind jeweils tangential zueinander versetzt. Tangential versetzt bedeutet so viel wie in Umfangsrichtung versetzt. D.h. in einer radialen Projektion liegen die Eingriffselemente beispielsweise eines ersten Antriebsrads während des Betriebs des Antriebssystems nicht über den Eingriffselementen beispielsweise eines zweiten, dritten, etc., Antriebsrads, sondern sind in Umfangsrichtung versetzt dazu. Insbesondere sind die Antriebsräder gleich oder zumindest mit gleichem Radius ausgebildet. Vorzugsweise sind die Eingriffselemente eines Antriebsrads über den Umfang äquidistant angeordnet. In der seitlichen (radialen) Projektionsansicht mehrerer übereinander angeordneter Antriebsräder liegen beispielsweise die Eingriffselemente eines ersten der Antriebsräder zwischen den Eingriffselementen der jeweils anderen Antriebsräder. Bei zwei übereinander angeordneten Antriebsrädern liegen die Eingriffselemente eines ersten der Antriebsräder zwischen den Eingriffselementen eines zweiten der Antriebsräder, insbesondere mittig zwischen den Eingriffselementen des zweiten Antriebsrads. Allerdings sind im Betrieb des Antriebssystems kleinere Abweichungen des tangentialen Versatzes der Eingriffselemente der verschiedenen Eingriffsräder möglich, da die Motoren, die den Antriebsrädern zugeordnet sind, insbesondere durch eine Drehmomentensteuerung der Motoren, Unregelmäßigkeiten oder Teilungsfehler in der Gegenverzahnung ausgleichen.

Außerdem sind die wenigstens zwei Antriebsräder axial zueinander versetzt und/oder koaxial zueinander angeordnet. Sie können in dieselbe Komponente der Gegenverzahnung eingreifen, oder in verschiedene Komponenten der Gegenverzahnung, z.B. das erste Antriebsrad in eine erste und das zweite Antriebsrad in eine weitere (zur ersten Gegenverzahnungskomponente stationäre) Gegenverzahnungskomponente.

Im Ergebnis werden mindestens zwei getrennte Antriebsräder übereinander (bzw. parallel koaxial nebeneinander) angeordnet und diese getrennt angesteuert. Bei zwei Antriebsrädern hat jedes Antriebsrad nur die Hälfte der Eingriffselemente, bei drei Antriebsrädern nur ein Drittel usw.. Die Eingriffselemente der übereinanderliegenden bzw. nebeneinander angeordneten Antriebsräder sind, wie beschrieben, zueinander tangential versetzt angeordnet, so dass die Eingriffselemente der unterschiedlichen Antriebsräder immer abwechselnd bzw. sequentiell in die Gegenverzahnung eingreifen.

Das Antriebssystem ist somit ein formschlüssiges Antriebssystem, bei dem immer mehrere Eingriffselemente gleichzeitig im Eingriff mit der Gegenverzahnung sind. Dies bedeutet, dass die Antriebsräder beispielsweise als Zahnräder/Ritzel ausgebildet sind, die formschlüssig in eine Gegenverzahnung, beispielsweise eine Zahnstange, eingreifen und ein Drehmoment übertragen können.

Das Antriebssystem kann in unterschiedlichen Anwendungen eingesetzt werden. So kann die Gegenverzahnung stationär sein, sodass sich ein mit den Antriebsrädern versehenes Fahrzeug durch die Übertragung des Drehmoments der Zahnräder auf die Zahnstange (translatorisch) entlang der Zahnstange bewegt. Das Fahrzeug kann beispielsweise ein schienengebundenes Fahrzeug sein, beispielsweise ein Transport- und/oder ein Achterbahnfahrzeug, das sich entlang einer Fahrstrecke bewegt. In anderen Anwendungsfällen können die Antriebsräder stationär angeordnet sein und ein mit der Gegenverzahnung verbundenes Objekt translatorisch bewegen. Das Antriebssystem wirkt dann als Linearantrieb, der analog zu einem Spindelantrieb oder Elektrozylinder ausgebildet ist, und der hohe Kräfte auf die Gegenverzahnung/ Zahnstange aufbringen kann. Weitere spezielle Anwendungen können z.B. im Bereich von Werkzeugmaschinen oder Fördertechnik realisiert werden.

Insbesondere kann das Antriebssystem wenigstens zwei Motoren aufweisen, die jeweils eines der Antriebräder antreiben. Die Antriebsräder werden so unabhängig voneinander angetrieben, d.h. die Stellung der Antriebselemente des zweiten Antriebsrads, die primär (in einer radialen Projektion) regelmäßig auf Lücke zu den Antriebselementen des ersten Antriebsrads und/oder weiterer Antriebsräder angeordnet sind, kann im Betrieb gegenüber den Antriebselementen des ersten Antriebsrads und/oder anderer Antriebsräder variieren bzw. sich gegenüber diesen versetzen.

Bei mehr als zwei Antriebsrädern können auch entsprechend viele Motoren vorgesehen sein, die jeweils ein Antriebsrad unabhängig voneinander bewegen.

Vorzugsweise weist das Antriebssystem wenigstens zwei Motoren auf, die jeweils so gesteuert werden, dass sie zumindest zeitweise immer ein vorgegebenes (konstantes) Drehmoment aufbringen. Durch die Drehmomentensteuerung können beispielsweise Unregelmäßigkeiten oder Lücken in der Verzahnung kompensiert werden.

Die wenigstens zwei Motoren sind insbesondere Elektromotoren mit einer Drehmomentsteuerung bzw. -regelung. Die Drehmomentensteuerung/-regelung erlaubt eine präzise Kontrolle über das abgegebene Drehmoment. Beispielsweise berechnet ein Regler basierend auf einem Ist-Soll-Vergleich den erforderlichen Steuerbefehl, um das Drehmoment des Motors an einen Sollwert anzupassen. Die Regelung erfolgt häufig über die Steuerung des Antriebsstroms. Der Regler kann die Amplitude oder die Phasenlage des Stroms anpassen, um das gewünschte Drehmoment zu erreichen.

Die beiden Antriebsräder können elektrisch so gesteuert werden, dass eine größere Zahnüberdeckung simuliert wird, die ansonsten nur mittels eines größeren Teilkreisdurchmessers zu erreichen wäre. Dies erfolgt dadurch, dass beide Antriebsmotoren drehmomentengesteuert sind und immer so weit vorlaufen, bis es zu einem Zahnkontakt kommt, über den das Drehmoment aufgebracht werden kann. Durch diese Steuerung werden im Betrieb die Abstände der Eingriffselemente des ersten Antriebsrads und des zweiten Antriebsrads (und ggf. weiterer Antriebsräder) immer leicht variieren, d.h. der tangentiale Versatz der Antriebsräder variiert und passt sich immer so an, dass immer mindestens ein Eingriffselement jedes Antriebsrads im Eingriff mit der Gegenverzahnung ist und seinen Anteil an der Gesamtantriebskraft auf die Gegenverzahnung aufbringen kann. Durch dieses bis zum Anschlag schnellere Vorwärtsdrehen gelingt es, trotz kleineren Teilkreisdurchmessern mehrere Eingriffselemente zugleich in den Eingriff zu bekommen.

Durch die Erfindung wird folgendes erreicht:
- Die von den Motoren generierte Gesamtantriebskraft kann zuverlässig auf zwei oder mehrere Eingriffselemente gleichmäßig aufgeteilt werden. Dadurch können die Eingriffselemente und die Gegenverzahnung weniger stark dimensioniert ausgeführt werden.
- Es wird Redundanz geschaffen, so dass bei Ausfall eines Antriebsstrangs mindestens ein weiterer Antriebsstrang zur Verfügung steht, der mit seinem Anteil an der Gesamtantriebskraft weiterhin für Fortbewegung sorgen kann. Dies kann für eine Notlaufeigenschaft ebenso wie zu einem geregelten motorischen Abbremsen genutzt werden.
- Es lässt sich eine höhere Kraft/ ein höheres Drehmoment übertragen, gleichzeitig ist der erforderliche Bauraum gegenüber bekannte Lösungen unter Verwendung eines einzelnen Antriebsrads zur direkten Kraftübertragung auf die Gegenverzahnung geringer.
- Die Motoren können kleiner und mit geringerer Leistung als im Fall eines einzigen leistungsstärkeren Antriebsmotors konzipiert werden.

Die wenigstens zwei Antriebsräder sind axial zueinander versetzt angeordnet. In der Regel sind die Antriebsräder parallel zueinander angeordnet und greifen in dieselbe oder eine andere Gegenverzahnung ein.

Die Antriebsräder können an einem Fahrzeug und die Gegenverzahnung kann stationär an einer Transportstrecke angeordnet sein.

Die Gegenverzahnung kann wenigstens eine Zahnstange umfassen.

Die Eingriffselemente weisen vorzugsweise Zylinder mit jeweils wenigstens einem drehbaren Element zum Abrollen bzw. Abwälzen der Zylinder an der Gegenverzahnung auf.

Insbesondere kann wenigstens eines der Antriebsräder Eingriffselemente aufweisen, die zum Mittelpunkt des Antriebsrads radial verschiebbar angeordnet sind.

Die Eingriffselemente können durch eine elastische Kraft, beispielsweise eine Federkraft, radial vom Mittelpunkt des Antriebsrads nach außen gedrückt werden.

Auf diese Weise wird ein passgenauer Eingriff der Eingriffselemente in die Gegenverzahnung erreicht.

### KURZE BESCHREIBUNG DER FIGUREN

Weitere Vorteile und Merkmale der Erfindung werden aus der Beschreibung bevorzugter Ausführungsbeispiele anhand der Figuren deutlich. Es zeigen:
Figur 1 eine perspektivische Darstellung eines erfindungsgemäßen Antriebssystems; und
Figur 2 eine schematische Darstellung der Anordnung zweier Antriebsrüder eines erfindungsgemäßen Antriebssystems.
Figur 3 eine schematische Darstellung eines weiteren Aspekts der Erfindung.

### DETAILLIERTE BESCHREIBUNG BEVORZUGTER AUSFÜHRUNGSBEISPIELE

Die nachfolgend beschriebenen Ausführungsbeispiele beziehen sich auf erfindungsgemäße Antriebssysteme.

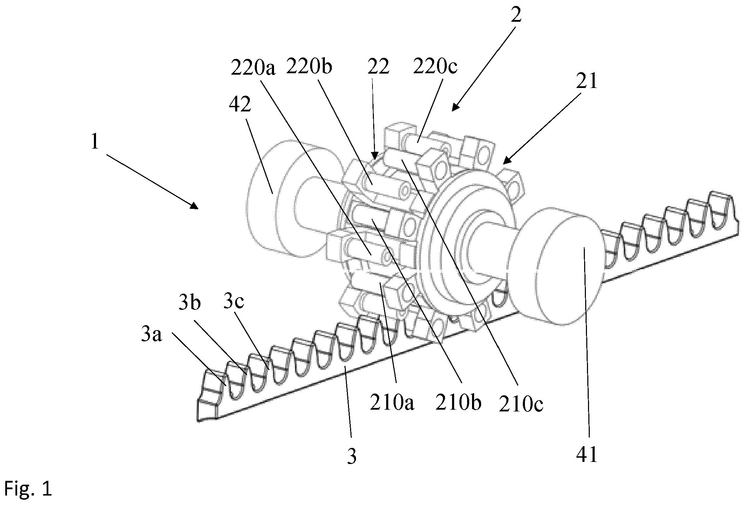

Die Figur 1 zeigt eine perspektivische Darstellung eines erfindungsgemäßen Antriebssystems 1 mit einem Antriebselement 2 mit zwei Antriebsrädern 21, 22 und einer Gegenverzahnung 3. Die Antriebsräder 21, 22 weisen jeweils eine Vielzahl von Eingriffselementen (z.B. Zähnen, drehbaren Rollen) 210a, 210b, 210c,...; 220a, 220b, 220c,... auf, von denen in der Fig. 1 nur einzelne bezeichnet sind. Die Eingriffselemente jeweils eines Antriebsrads sind äquidistant zueinander angeordnet.

Die Gegenverzahnung 3 weist ebenfalls Eingriffselemente 3a, 3b, 3c,... auf, von denen in der Figur 1 nur einzelne bezeichnet sind.

Die Antriebsräder 21, 22 sind in diesem Ausführungsbeispiel koaxial zueinander angeordnet. Außerdem sind in diesem Anwendungsbeispiel sowohl die Anzahl der Eingriffselemente als auch die Zahnabstände des ersten Antriebsrads 21 gleich denen des zweiten Antriebsrads 22. Die Antriebsräder 21, 22 sind tangential, also entlang des Umfangs, derart zueinander ausgerichtet, dass die Eingriffselemente des ersten Antriebsrads 21 und des zweiten Antriebsrads 22 sequentiell und (bezogen auf die beiden Antriebsräder 21, 22) abwechselnd in die Eingriffselemente 3a, 3b, 3c,... der Gegenverzahnung 3 eingreifen. Dies wird dadurch bewerkstelligt, dass ein Anzahl von n ersten Eingriffselementen 210a, 210b, 210c,...,210g des ersten Antriebsrads 21 tangential (d.h. in Umfangsrichtung bzw. entlang des Umfangs) um einen Versatzwinkel α gegenüber einer Anzahl von n zweiten Eingriffselementen 220a, 220b, 220c,..., 220g des zweiten Antriebsrads 22 versetzt ist. α beträgt bei zwei Antriebsrädern 21, 22 beispielsweise ca. 360°/2N. Bei drei Antriebsrädern kann der Versatzwinkel α beispielsweise ca. 360°/3N betragen, im Allgemeinen ca. 360°/(z*N), wobei z die Anzahl der Antriebsräder des Antriebssystems 1 ist. Die Anzahl N kann an die Anzahl z angepasst werden, in etwa so, dass der Wert z*N für eine Ausführung mit z Antriebsrädern dem Wert N für eine entsprechende Ausführung mit einem einzigen Antriebsrad z=1 entspricht.

Jedes der Antriebsräder 21, 22 wird unabhängig vom jeweils anderen Antriebsrad 21 bzw. 22 von einem ihm zugeordneten Elektromotor 41, 42 angetrieben.

Die Elektromotoren 41, 42 werden elektrisch so angesteuert, dass für die beiden Antriebsräder 21, 22 eine größere Zahnüberdeckung simuliert wird, die ansonsten nur mit einem größeren Teilkreisdurchmesser zu erreichen wäre. Dies erfolgt dadurch, dass beide Antriebsmotoren 41,42 drehmomentengesteuert sind und immer so weit vorlaufen, bis es zu einem Zahnkontakt kommt, über den das Drehmoment aufgebracht werden kann. Durch diese Steuerung werden die Abstände der Eingriffselemente 210a, 220a; 210b, 220b;... zwischen den beiden Antriebsrädern 21 bzw. 22 immer leicht variieren, d.h. der tangentiale Versatz der Antriebsräder 21, 22 variiert um einen Winkel Δα (d.h. der Versatz der Eingriffselemente beträgt α+/- Δα) und passt sich immer so man, dass immer mindestens ein Eingriffselement jedes Antriebsrads 21, 22 im Eingriff ist und seinen Anteil an der Gesamtantriebskraft auf die Gegenverzahnung 3 aufbringen kann. Durch das bis zum Anschlag schnellere Vorwärtsdrehen gelingt es, dass trotz eines kleineren Teilkreisdurchmessers in einem Zeitraum mehrere Eingriffselemente zeitgleich im Eingriff mit der Gegenverzahnung 3 stehen.

Die von den Motoren 41 und 42 generierte Gesamtantriebskraft kann so zuverlässig auf die zwei (oder mehrere) Eingriffselemente (z.B. 210a, 220a) gleichmäßig aufgeteilt werden. Dadurch können die Eingriffselemente 210, 220 und die Gegenverzahnung 3 weniger stark dimensioniert ausgeführt werden. Außerdem wird Redundanz geschaffen, so dass bei einem Ausfall eines Antriebsstrangs 21, 41 mindestens ein weiterer Antriebsstrang 22, 42 zur Verfügung steht, der mit seinem Anteil an der Gesamtantriebskraft weiter noch für Fortbewegung sorgen kann.

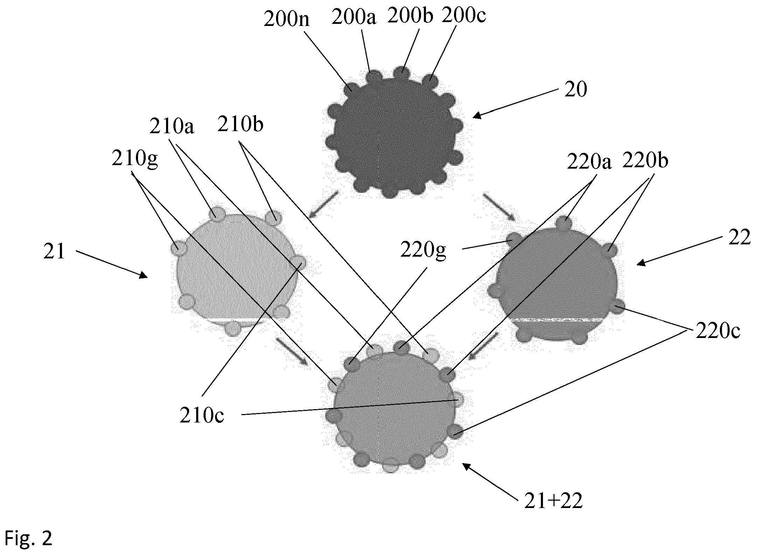

Die Figur 2 zeigt die Konfiguration der Antriebsräder 21 und 22 im Fall einer Anzahl von zwei parallel und koaxial angeordneten Antriebsrädern 21 und 22.

Ausgehend von einer Konfiguration mit einem Antriebsrad 20 mit 2n=14 (N=7) Eingriffselementen 200a, 200b,...200n wird das Antriebsrad 20 aufgeteilt in zwei Antriebsräder 21, 22. Jedes dieser beiden Antriebsräder 21, 22 besitzt nur eine Hälfte N=7 der ursprünglichen 2N=14 Eingriffselemente, so dass bei seitlich paralleler koaxialer Anordnung dieser beiden Antriebsräder 21 und 22 alle Eingriffselemente 210a, 210b,...,210g, 220a, 220b,...220g den Positionen der Eingriffselemente 200a, 200b,...200n des ursprünglichen Antriebsrads 20 entsprechen, d.h. mit diesen in der seitlichen Projektion deckungsgleich sind (vgl. unten dargestellte Antriebsradkombination 21+22).

Die zwei getrennten koaxial nebeneinander angeordneten Antriebsräder 21, 22 werden getrennt voneinander angesteuert. Die Eingriffselemente 210, 220 der übereinanderliegenden Antriebsräder 21, 22 sind zueinander tangential versetzt um einen Winkel von ca. 360°/2n=360°/14= ca. 26° angeordnet, so dass die Eingriffselemente 210a, 220a; 210b, 220b;..., 210g, 220g der unterschiedlichen Antriebsräder 21 bzw. 22 immer abwechselnd in die Gegenverzahnung 3 eingreifen.

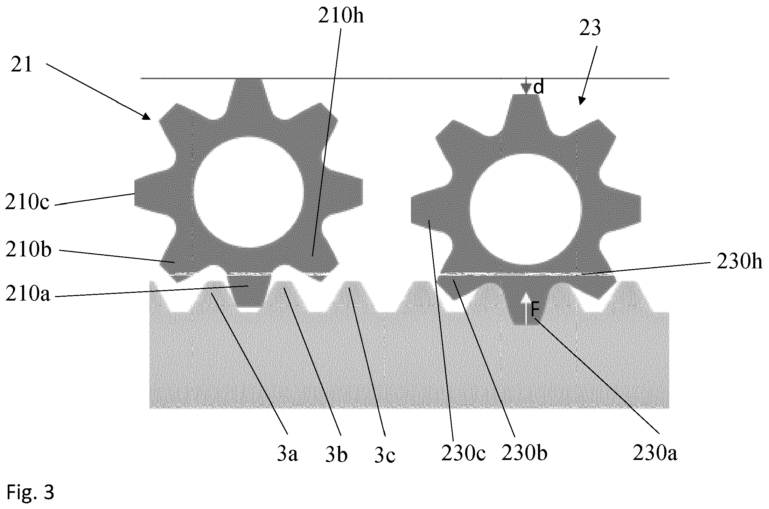

Die Figur 3 zeigt einen weiteren Aspekt der Erfindung, der unabhängig oder abhängig von den o.g. Ausführungsformen realisiert werden kann.

Ein auf der linken Seite der Figur 3 dargestelltes herkömmliches oder wie oben beschriebenes Antriebsrad 21 weist Eingriffselemente 210a, 210b,...210h auf. Das Antriebsrad 21 ist im Wesentlichen starr ausgebildet. Aus diesem Grund muss der Abstand zwischen dem Antriebsrad 21 und der Gegenverzahnung 3 relativ genau eingestellt und ggf. mit einem Spiel versehen werden, sodass bei einem Kontakt zwischen dem Zahnradkopf und der Gegenverzahnung 3 keine unerwünschten Kräfte auf den Zahnradkopf einwirken.

Ein auf der rechten Seite der Figur 3 ist ein abgewandeltes Antriebsrad 23 dargestellt. Dieses weist Eingriffselemente (Zähne bzw. Rollen) 230a, 230b,..., 230h auf, die radial verschieblich im Antriebsrad 23 gelagert sind, sodass der Abstand des Antriebsrads 23 zur Gegenverzahnung verkleinert werden kann (z.B. um einen Betrag d) bzw. auch der Teilkreis der Antriebsrads 23 angepasst werden kann. Auf diese Wiese kann Bauraum eingespart werden. Mit einer Federung wird das Eingriffselement in der äußeren Position gehalten, so dass normales Einzahnen möglich ist. Im Zahngrund wird das Eingriffselement dann gegen eine Gegenkraft F, beispielsweise eine Federkraft, radial eingedrückt. So können auch Abweichungen im Abstand zwischen dem Antriebsrad 23 und der Gegenverzahnung 3 ausgeglichen werden.

## Patentansprüche

1. Antriebssystem (1), umfassend:
ein Antriebselement (2); und
eine Gegenverzahnung (3),
wobei das Antriebselement (2) zwei oder mehrere Antriebsräder (21, 22) mit Eingriffselementen (210, 220) aufweist, wobei die Eingriffselemente (210, 220) der verschiedenen Antriebsräder (21, 22) jeweils tangential zueinander versetzt sind, sodass Eingriffselemente (210, 220) der einzelnen Antriebsräder (21, 22) immer abwechselnd in die Gegenverzahnung (3) eingreifen und sich zumindest zeitweise mindestens jeweils ein Eingriffselement (210, 220) von den mindestens zwei Antriebsrädern (21, 22) im Eingriff mit der Gegenverzahnung (3) befindet,
**dadurch gekennzeichnet, dass**
die wenigstens zwei Antriebsräder (21, 22) axial zueinander versetzt und/oder koaxial zueinander angeordnet sind.

2. Antriebssystem (1) nach Anspruch 1, **dadurch gekennzeichnet, dass** das Antriebssystem (1) wenigstens zwei Motoren (41, 42) aufweist, die wenigstens jeweils eines der Antriebräder (21, 22) antreiben.

3. Antriebssystem (1) nach einem der vorhergehenden Ansprüche, **dadurch gekennzeichnet, dass** das Antriebssystem (1) wenigstens zwei Motoren (41, 42) aufweist, die so gesteuert werden, dass sie zumindest zeitweise immer dasselbe Drehmoment aufbringen.

4. Antriebssystem (1) nach einem der vorhergehenden Ansprüche, **dadurch gekennzeichnet, dass** die wenigstens zwei Motoren (41, 42) Elektromotoren mit einer Drehmomentsteuerung bzw. -regelung sind.

5. Antriebssystem (1) nach einem der vorhergehenden Ansprüche, **dadurch gekennzeichnet, dass** die wenigstens zwei Antriebsräder (21, 22) radial zueinander versetzt und/oder axial zueinander versetzt angeordnet sind.

6. Antriebssystem (1) nach einem der vorhergehenden Ansprüche, **dadurch gekennzeichnet, dass** die Antriebsräder (21, 22) an einem Fahrzeug und die Gegenverzahnung (3) stationär an einer Transportstrecke angeordnet ist.

7. Antriebssystem (1) nach einem der vorhergehenden Ansprüche, **dadurch gekennzeichnet, dass** die Gegenverzahnung (3) wenigstens eine Zahnstange umfasst.

8. Antriebssystem (1) nach einem der vorhergehenden Ansprüche, **dadurch gekennzeichnet, dass** die Eingriffselemente (210, 220) als Zylinder ausgebildet sind mit jeweils wenigstens einem drehbaren Element zum Abrollen bzw. Abwälzen der Zylinder an der Gegenverzahnung (3).

9. Antriebssystem (1) nach einem der vorhergehenden Ansprüche, **dadurch gekennzeichnet, dass** wenigstens eines der Antriebsräder (23) Eingriffselemente (230) aufweist, die zum Mittelpunkt des Antriebsrads (23) radial verschiebbar angeordnet sind.

10. Antriebssystem (1) nach Anspruch 9, **dadurch gekennzeichnet, dass** die Eingriffselemente (230) durch eine elastische Kraft (F) radial vom Mittelpunkt des Antriebsrads (23) nach außen gedrückt werden.

## Claims

1. A drive system (1) comprising:
a drive element (2); and
a counter gear (3),
wherein the drive element (2) has two or more drive wheels (21, 22) with engagement elements (210, 220), wherein the engagement elements (210, 220) of the different drive wheels (21, 22) are each offset tangentially to each other so that engagement elements (210, 220) of the individual drive wheels (21, 22) always engage alternately in the counter gear (3) and at least one engagement element (210, 220) of at least one of the at least two drive wheels (21, 22) is in engagement with the counter gear (3) at least temporarily,
**characterized in that**
the at least two drive wheels (21, 22) are arranged axially offset from one another and/or coaxially with one another.

2. The drive system (1) according to claim 1, **characterized in that** the drive system (1) has at least two motors (41, 42) which each drive at least one of the drive wheels (21, 22).

3. The drive system (1) according to one of the preceding claims, **characterized in that** the drive system (1) has at least two motors (41, 42) which are controlled in such a way that they always apply the same torque, at least temporarily.

4. The drive system (1) according to one of the preceding claims, **characterized in that** the at least two motors (41, 42) are electric motors with torque control or regulation.

5. The drive system (1) according to one of the preceding claims, **characterized in that** the at least two drive wheels (21, 22) are arranged radially offset from each other and/or axially offset from each other.

6. The drive system (1) according to one of the preceding claims, **characterized in that** the drive wheels (21, 22) are arranged at a vehicle and the counter gear (3) is arranged stationary at a transport route.

7. The drive system (1) according to one of the preceding claims, **characterized in that** the counter gear (3) comprises at least one rack.

8. The drive system (1) according to one of the preceding claims, **characterized in that** the engagement elements (210, 220) are designed as cylinders, each with at least one rotatable element for rolling over or rolling off the cylinders on the counter gear (3).

9. The drive system (1) according to one of the preceding claims, **characterized in that** at least one of the drive wheels (23) has engagement elements (230) which are arranged so as to be radially displaceable towards the centre of the drive wheel (23).

10. The drive system (1) according to claim 9, **characterized in that** the engagement elements (230) are pressed radially outwards from the centre of the drive wheel (23) by an elastic force (F).

## Revendications

1. Système d'entraînement (1) comprenant :
un élément d'entraînement (2); et
une contre-denture (3),
dans lequel l'élément d'entraînement (2) comprend deux ou plusieurs roues d'entraînement (21, 22) avec des éléments d'engrènement (210, 220), les éléments d'engrènement (210, 220) des différentes roues d'entraînement (21, 22) étant décalés tangentiellement les uns par rapport aux autres, de sorte que les éléments d'engrènement (210, 220) des différentes roues d'entraînement (21, 22) s'engrènent toujours en alternance dans la contre-denture (3) et qu'au moins un élément d'engrènement (210, 220) de chacune des au moins deux roues d'entraînement (21, 22) est au moins temporairement en prise avec la contre-denture (3),
**caractérisé en ce que**
les au moins deux roues d'entraînement (21, 22) sont décalées axialement l'une par rapport à l'autre et/ou disposées coaxialement l'une par rapport à l'autre.

2. Système d'entraînement (1) selon la revendication 1, **caractérisé en ce que** le système d'entraînement (1) comporte au moins deux moteurs (41, 42) qui entraînent au moins chacune des roues d'entraînement (21, 22).

3. Système d'entraînement (1) selon l'une des revendications précédentes, **caractérisé en ce que** le système d'entraînement (1) comprend au moins deux moteurs (41, 42) qui sont commandés de manière à toujours fournir, au moins temporairement, le même couple.

4. Système d'entraînement (1) selon l'une des revendications précédentes, **caractérisé en ce que** les au moins deux moteurs (41, 42) sont des moteurs électriques avec une commande ou une régulation du couple.

5. Système d'entraînement (1) selon l'une des revendications précédentes, **caractérisé en ce que** les au moins deux roues d'entraînement (21, 22) sont disposées de manière décalée radialement l'une par rapport à l'autre et/ou décalées axialement l'une par rapport à l'autre.

6. Système d'entraînement (1) selon l'une des revendications précédentes, **caractérisé en ce que** les roues d'entraînement (21, 22) sont disposées sur un véhicule et la contre-denture (3) est disposée de manière stationnaire sur un trajet de transport.

7. Système d'entraînement (1) selon l'une des revendications précédentes, **caractérisé en ce que** la contre-denture (3) comprend au moins une crémaillère.

8. Système d'entraînement (1) selon l'une des revendications précédentes, **caractérisé en ce que** les éléments d'engrènement (210, 220) sont conçus sous forme de cylindres avec chacun au moins un élément rotatif pour faire rouler ou dérouler les cylindres sur la contre-denture (3).

9. Système d'entraînement (1) selon l'une des revendications précédentes, **caractérisé en ce qu'**au moins l'une des roues d'entraînement (23) comporte des éléments d'engrènement (230) qui sont disposés de manière à pouvoir se déplacer radialement vers le centre de la roue d'entraînement (23).

10. Système d'entraînement (1) selon la revendication 9, **caractérisé en ce que** les éléments d'engrènement (230) sont poussés radialement vers l'extérieur à partir du centre de la roue d'entraînement (23) par une force élastique (F).
